Europäisches Patentamt

**European Patent Office**

**Office européen des brevets**

(11) Veröffentlichungsnummer : **0 062 276**
**B1**

# (12) EUROPÄISCHE PATENTSCHRIFT

(45) Veröffentlichungstag der Patentschrift :
07.08.85

(21) Anmeldenummer : **82102634.1**

(22) Anmeldetag : **29.03.82**

(51) Int. Cl.⁴ : **H 05 B 41/29, H 02 M 7/533**

(54) **Vorschaltanordnung zum Betreiben von Niederdruckentladungslampen.**

(30) Priorität : **30.03.81 DE 3112577**

(43) Veröffentlichungstag der Anmeldung :
**13.10.82 Patentblatt 82/41**

(45) Bekanntmachung des Hinweises auf die Patenterteilung : **07.08.85 Patentblatt 85/32**

(84) Benannte Vertragsstaaten :
**AT BE CH DE FR GB IT LI**

(56) Entgegenhaltungen :
**BE-A- 885 744**
**US-A- 4 251 752**

(73) Patentinhaber : **Patent-Treuhand-Gesellschaft für
elektrische Glühlampen mbH
Hellabrunner Strasse 1
D-8000 München 90 (DE)**

(72) Erfinder : **Zuchtriegel, Anton, grad
Sudetenstrasse 33
D-8021 Taufkirchen (DE)**

EP 0 062 276 B1

**Beschreibung**

Die Erfindung betrifft eine Vorschaltanordnung — zum Betreiben einer oder mehrerer Niederdruckentladungslampen —, die einen selbsterregten Gegentaktschalter enthält, der zwei mit den Kollektor-Emitter-Strecken in Reihe liegende gleichsinnig gepolte Schalttransistoren T1, T2 aufweist, die den Gleichspannungsausgang eines mit Wechselspannung versorgten Wandlerteils überbrücken. Nach der BE-A-885 744 ist bei Mehrlampenbetrieb jeder Lampenbetriebskreis mit einem eigenen Serienresonanzkreis gekoppelt, der aus der jeweiligen Vorschaltinduktivität L1 bzw. L1' ... und einem Kondensator C1 bzw. C1' ... besteht, wobei die einzelnen Lampenbetriebskreise — mit den entsprechenden Serienresonanzkreisen — in Parallelschaltung angeordnet sind.

Weiter ist nach der BE-A-885 744 sowohl für den Einlampen- als auch Mehrlampenbetrieb eine Anschwing- und Steuerschaltung vorgesehen, die für eine günstige Ansteuertechnik bei den Schalttransistoren T1 und T2 des Gegentaktschalters sorgen und einen verlustarmen Betrieb sichern soll.

Der Erfindung liegt die Aufgabe zugrunde, für den Gegentaktschalter der Lampenbetriebsschaltung gemäß BE-A-885 744 — sowohl für den Einlampen- als auch Mehrlampenbetrieb — eine weiter optimierte Anschwing- und Steuerschaltung zu schaffen.

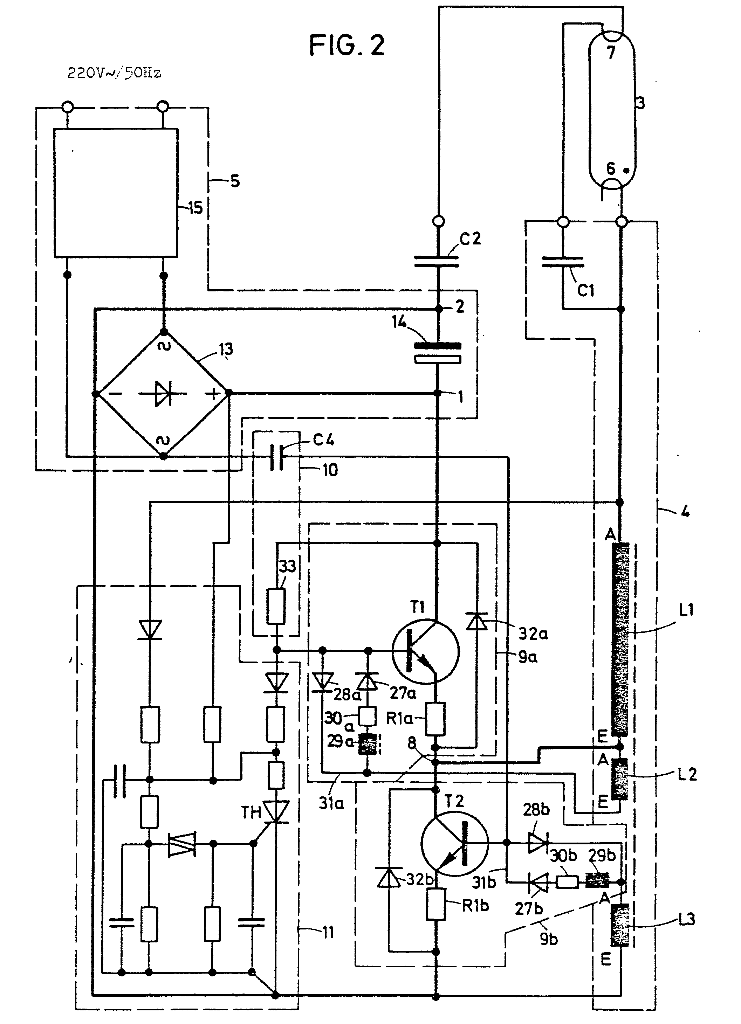

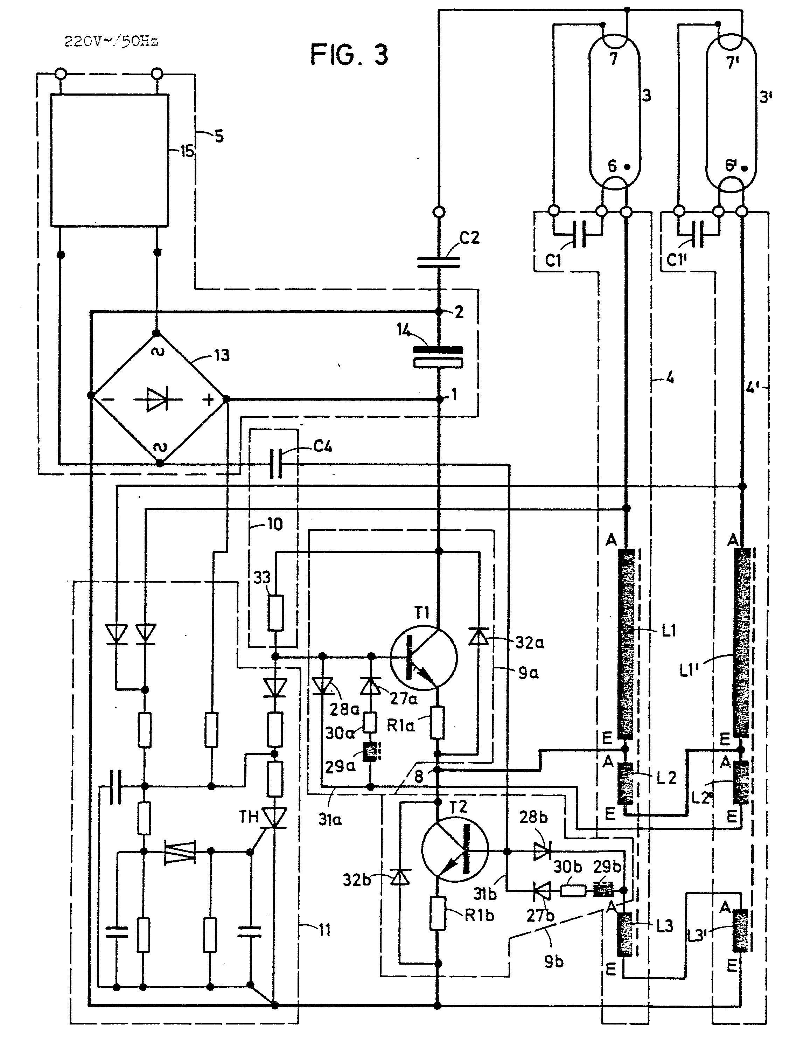

Die Vorschaltanordnung mit den im Oberbegriff des Hauptanspruchs genannten Merkmalen ist erfindungsgemäß dadurch gekennzeichnet, daß die Basis des mit dem negativen Gleichspannungsanschluß verbundenen Schalttransistors T2 über einen Kondensator C4 an einen der beiden Anschlüsse der Wechselspannungsversorgung des Wandlerteils angeschlossen ist und daß jeder der beiden Schalttransistoren T1, T2 einen Emitterwiderstand R1a bzw. R1b aufweist. Mit dieser Anschlußtechnik des Kondensators wird die Basis des Transistors T2 durch jede positive Strom-Halbwelle der Wechselspannungsversorgung getriggert ; der Triggerzustand bleibt damit solange bestehen, wie die Schaltung an Netzspannung liegt. Ein Fehlstart durch eine startschwache Schaltung, die bei nur einem Triggerimpuls (gemäß dem Hauptpatent ein einziger Gleichstrom-Ladeimpuls über den Diac und Kondensator) nicht anschwingt, wird hier wirksam unterbunden. — Durch die an den Emittern der Transistoren T1 und T2 unmittelbar angeschlossenen Widerstände R1a, R1b fließen die Transistor-Schaltströme und erzeugen an ihnen Spannungsabfälle, die den Basis-Steuerspannungen phasenbezogen entgegengerichtet sind. Die Emitterwiderstände R1a, R1b, an denen sich eine Gegenkopplungsspannung aufbaut, sorgen für eine Symmetrierung der Transistor-Daten. Bei fehlenden Emitterwiderständen (entsprechend der Schaltungsausführung gemäß dem Hauptpatent) können ungleiche Stromverstärkungsfaktoren der Transistoren T1, T2 und die daraus resultierenden unterschiedlichen Leitzustände bei symmetrischer Basis-Ansteuerung unsymmetrische Lampenstrom-Halbwellen bewirken, die zu einer Wirkungsgradverminderung führen. Eine Lösung dieses Problems wird durch die symmetrierende Wirkung der Emitterwiderstände R1a, R1b erreicht. — Auf die weitere Ausgestaltung der Anschwing- und Steuerschaltung wird in der Beschreibung der Figuren 2 und 3 eingegangen.

Die Erfindung ist anhand der folgenden Figuren näher erläutert :

Figur 1  ist ein Blockschaltbild der Vorschaltanordnung ;

Figur 2 zeigt das Schaltbild eines Ausführungsbeispiels für den Einlampenbetrieb ;

Figur 3 zeigt das Schaltbild eines Ausführungsbeispiels für den Mehrlampenbetrieb.

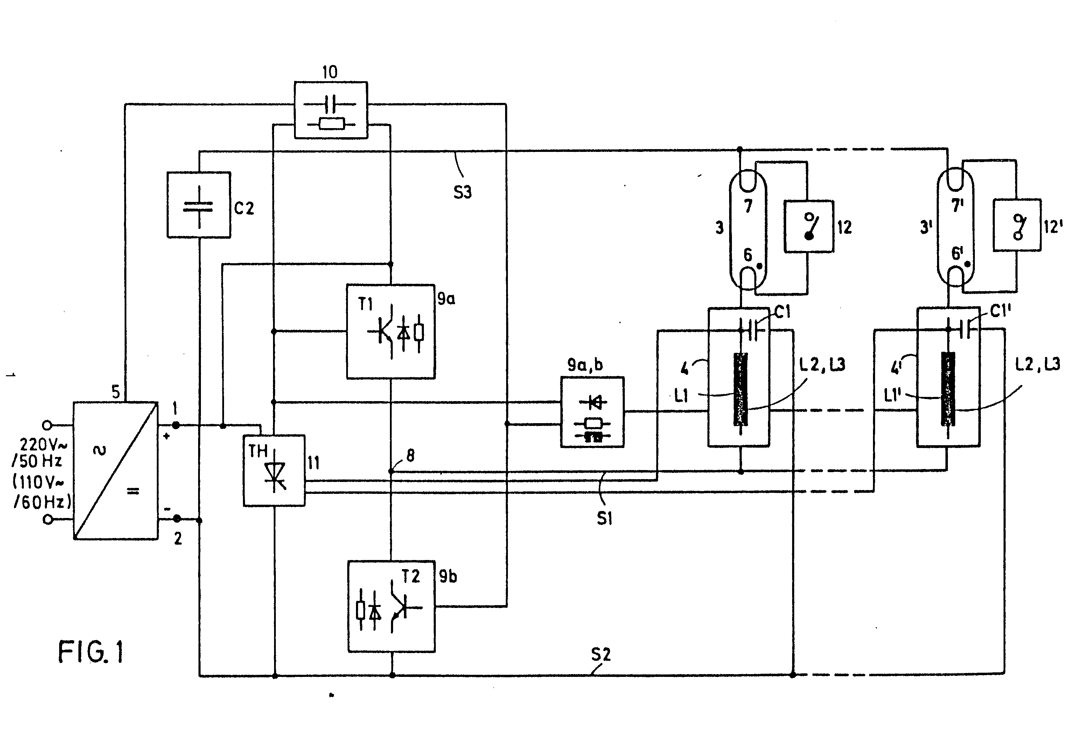

Das Blockschaltbild der Figur 1 gibt den prinzipaufbau der Vorschaltanordnung wieder. Eine Gleichspannungsversorgung mit den Anschlüssen 1, 2 ist von zwei mit den Kollektor-Emitter-Strecken in Reihe liegenden, gleichsinnig gepolten Hochvolt-Schalttransistoren T1, T2 überbrückt. Die Transistor-Anordnung arbeitet als selbstschwingender Gegentaktschalter, über den eine oder mehrere Niederdruckentladungslampen 3, 3' gespeist werden. Bei Mehrlampenbetrieb — es lassen sich bei entsprechender Dimensionierung der Vorschaltgerätebauteile beliebig viele Lampenbetriebskreise anfügen — enthält jeder Lampenbetriebskreis eine eigene Vorschaltinduktivität L1 bzw. L1' und ist mit einem eigenen Serienresonanzkreis 4, 4' gekoppelt, der aus der jeweiligen Vorschaltinduktivität L1 bzw. L1' und einem Kondensator C1 bzw. C1' besteht. Die einzelnen Lampenbetriebskreise — mit den entsprechenden Serienresonanzkreisen — sind in Parallelschaltung angeordnet. Bei Einlampenbetrieb ist dementsprechend dem einen Lampenbetriebskreis ein Serienresonanzkreis 4 zugeordnet.

Die Schaltungsanordnung ist optimal funktionsfähig, wenn sie mit Gleichspannung geringer Welligkeit ≤ 20 % gespeist wird. Mittels eines vorgeschalteten Wandlerteils 5, das die für den Transistor-Gegentaktschalter T1, T2 notwendige Gleichspannung liefert, ist die Schaltungsanordnung an üblicher Netzwechselspannung, z. B. 220 V/50 Hz (bzw. 110 V/60 Hz) anschließbar. Das Wandlerteil 5, das vorteilhaft aus einem Brückengleichrichter mit nachgeschaltetem Siebkondensator besteht sowie ein Netzfilter enthält, liefert bei Versorgung mit 220 V-Netzwechselspannung an den Anschlüssen 1, 2 eine Gleichspannung von ca. $\sqrt{2} \cdot 220$ V (Für den Betrieb an 110 V/60 Hz besteht das Wandlerteil vorteilhaft aus einer symmetrischen Verdopplerschaltung sowie ggf. einem Netzfilter). Über den Transistor-Gegentaktschalter T1, T2 wird dann den jeweiligen Lampenbetriebskreisen in wechselnder Polung nur die halbe Spannung zugeführt. Die Serienresonanzkreise 4, 4' bewirken, daß an den einzelnen Lampen 3, 3' — insbesondere während des Zündvorgangs — eine wesentlich höhere Spannung anliegt ; auch während des laufenden Betriebs ist für eine ausreichend hohe Spannung an den Lampen 3, 3' gesorgt.

Der schaltungsgemäße Aufbau ist dergestalt, daß die ersten Elektroden 6, 6' der Lampen 3, 3' über die entsprechenden Vorschaltinduktivitäten L1, L1' — bzw. Schwingkreisinduktivitäten — an eine Sammelleitung S1 angeschlossen sind, die an den Mittelabgriff 8 zwischen den beiden Transistoren T1, T2 des Gegentaktschalters gelegt ist. Des weiteren sind die Elektroden 6, 6' über die Schwingkreiskondensatoren C1, C1' an eine Sammelleitung S2 angeschlossen, die an den einen (Minus-)Pol 2 der Gleichspannungsversorgung geht. Modifizierte Anordnungen der Schwingkreiskondensatoren sind in den Figuren 2 und 3 gezeigt. Die zweiten Elektroden 7, 7' der Lampen 3, 3' sind mit einer Sammelleitung S3 verbunden, die über einen Kondensator C2 relativ großer Kapazität ebenfalls an den (Minus-)Pol 2 der Gleichspannungsversorgung angeschlossen ist. Der Kondensator C2, der mindestens 50-fachen Kapazitätswert eines Schwingkreiskondensators C1 hat, bewirkt, daß die Sammelleitung S3 praktisch auf Mittelpotential der Gleichspannungsversorgung gelegt ist. Über eine derartige Schaltungsanordnung werden die Lampen 3, 3' mit Wechselspannung höherer Frequenz (im Ton- oder Hochfrequenzbereich) gespeist. Die Impedanz des Kondensators C2 ist bei der hohen Frequenz der Lampenströme sehr niedrig ; der Kondensator C2 wirkt nur als Blindleistungs-Verbraucher. Die Taktfrequenz des Transistor-Oszillators ist durch die Serienresonanzschwingkreise 4, 4' bestimmt, wobei die einzelnen Lampen 3, 3' für eine Dämpfung der jeweiligen Schwingkreise sorgen.

Die Schwingkreisinduktivitäten liefern über eigene Wicklungen die Steuerenergie für die Schalttransistoren T1, T2 des Gegentaktschalters. — Mit den Vorschaltinduktivitäten L1, L1' sind Steuerwicklungen L2, L2' bzw. L3, L3' gekoppelt, die über ein Netzwerk aus schnellen Schaltdioden, Widerständen und Induktivitäten mit der Basis des entsprechenden Schalttransistors T1 bzw. T2 verbunden sind. Mit 9a bzw. 9b ist die gesamte Steuerschaltung des Transistors T1 bzw. T2 bezeichnet.

Das Anlaufen des Transistor-Oszillators wird durch eine Anschwingschaltung 10 bewirkt, die den mit dem Minuspol 2 verbundenen Transistor T2 über dessen Basis triggert. Der leitend gesteuerte Schalttransistor T2 stößt die Schwingkreise 4, 4' an, deren rückgekoppelte Steuerströme die Oszillation des Gegentaktschalters T1, T2 aufrechterhalten. — Der erfindungsgemäße Aufbau der Anschwingschaltung 10 und der Steuerschaltung 9a, 9b der Transistoren T1, T2 ist anhand der Figuren 2 und 3 näher erläutert.

Die Serienresonanz-Schwingschaltungen 4, 4' arbeiten so lange stabil — mit geringen Eigenverlusten — wie die jeweilige Lampe 3 bzw. 3' als Last angeschlossen ist und Energie entnimmt. Die Schwingkreise 4, 4' müssen so bedämpft sein, daß gute Ansteuerbedingungen der Schalttransistoren T1, T2 eingehalten werden. Bei Lastunterbrechung, z. B. bei einem Lampenwechsel, tritt eine starke Spannungsüberhöhung und dadurch eine erhebliche Geräteverlustleistung auf, die bei Fehlen geeigneter Schaltungsmaßnahmen zur Zerstörung des Gerätes führen würde. — Eine Schutzschaltung 11 verhindert eine Zerstörung des Gerätes durch Ausschalten der Schalttransistoren T1, T2 innerhalb von ca. 0,5 sec nach dem Auftreten der Störung. Zugleich wird verhindert, daß bei einseitiger Entnahme einer Lampe 3 bzw. 3' aus einer Lampenfassung an den freien Anschlußstiften eine gefährliche Berührungsspannung auftritt. Die Schutzschaltung 11 enthält ein steuerbares Schaltelement TH, das in der Verbindungsleitung zwischen der Basis des — mit dem Pluspol 1 der Gleichspannungsversorgung verbundenen — Schalttransistors T1 und dem Minuspol 2 der Gleichspannungsversorgung angeordnet ist.

Wegen der hohen Spannung des Resonanzkondensators C1, C1' bei nicht brennender Lampe 3, 3' — die gleichzeitig Leerlaufspannung für die Lampe ist — zünden die Niederdruckentladungslampen 3, 3' auch ohne Vorheizung der Elektroden, was eine Kaltzündung der Lampen bedeutet. Zur Sicherstellung einer großen Schaltfestigkeit können die Schalter 12, 12' vorgesehen sein, die die Lampen 3, 3' beim Einschalten der Netzspannung überbrücken, um die Elektroden 6, 7 ; 6', 7' vorzuheizen. Die Schalter 12, 12' geben durch Öffnen die Lampenzündung nach ausreichender Vorheizzeit frei. — Als Schalter 12, 12' eignen sich schnellschaltende Vierschicht-Dioden oder Schalter mit einem Glimmzünder, die einen hohen Glimmstrom erlauben und die Lampenzündung bei nicht vorgeheizten Elektroden 6, 7 ; 6', 7' verhindern. Schaltungsanordnungen, bei denen durch entsprechende Anordnung der Kondensatoren C1, C1' ... auf den Startschalter verzichtet werden kann, sind in den Figuren 2 und 3 gezeigt.

Insbesondere soll anhand der Figuren 2 und 3 die erfindungsgemäße Ausgestaltung der Anschwingschaltung 10 und der Steuerschaltung 9a, 9b erläutert werden. Vorweg jedoch noch Einzelheiten zum allgemeinen Schaltungsaufbau der Figuren 2 und 3. Über das Vorschaltgerät werden eine (Figur 2) bzw. zwei (Figur 3) 50 W/1,5 m-Leuchtstofflampen 3, 3' gespeist, deren Zündspannung über 800 V liegt. Die Lampenbetriebsfrequenz ist ca. 35 kHz. Die Netzaufnahmeleistung des Gerätes incl. Netzfilter beträgt beim Einlampenbetrieb ca. 56 W, beim Zweilampenbetrieb ca. 112 W. Das die Gleichspannung liefernde Wandlerteil 5 ist im Aufbau gezeigt. Einem Brückengleichrichter 13 ist ein Siebkondensator 14 nachgeschaltet ; ein Filter 15 schirmt das Netz gegen Hochfrequenzwellen und unzulässig hohe Ladestromspitzen ab.

Die Figuren 2 und 3 zeigen des weiteren unterschiedliche Anschlußmöglichkeiten für die Kondensatoren C1, C1' der Serienresonanzkreise 4, 4'.

Auf den genauen Aufbau und die Funktion des Schutzschalters 11 soll hier näher eingegangen werden.

Wie weiter aus dem Schaltbild ersichtlich, sind die Steuerwicklungen L2, L2' bzw. L3, L3' bei Betrieb mehrerer Lampenkreise (Multi-Parallelbetrieb) auf die einzelnen Lampenbetriebskreise aufgeteilt (Figur 3), so daß jeder Kreis nur den n-ten Teil der Steuerenergie zu liefern hat. Die Summation der Spannungsanteile soll optimal so hoch sein, daß die Schalttransistoren T1, T2 in die « Quasi-Sättigung » gesteuert werden. Die den beiden Schalttransistoren T1, T2 jeweils zugeordneten Gruppen von Steuerwicklungen L2, L2' und L3, L3' sind galvanisch voneinander getrennt, wobei die einzelnen Wicklungen einer Gruppe in einer Reihenschaltung angeordnet sind, die die Basis-Emitter-Strecke des jeweiligen Schalttransistors T1 bzw. T2 überbrückt. Bei Betrieb nur einer Lampe ist jeweils auch nur die Steuerwicklung L2 und L3 mit der Vorschaltinduktivität L1 gekoppelt (Figur 2).

Das über die Steuerwicklungen L2, L2' bzw. L3, L3' mit Energie versorgte Steuernetzwerk 9a bzw. 9b besteht jeweils aus zwei antiparallelgeschalteten Dioden 27a, 28a bzw. 27b, 28b, die mit der Basis des Transistors T1 bzw. T2 verbunden sind, wobei die in Flußrichtung zur Basis hin gepolte Diode 27a bzw. 27b noch mit einer Induktivität 29a bzw. 29b und einem Strombegrenzungswiderstand 30a bzw. 30b in Reihe liegt. Die im Aufsteuerkreis der beiden Schalttransistoren T1, T2 liegenden Induktivitäten 29a, 29b bewirken ein verbessertes Schaltverhalten. Durch sie wird die Spannungsanstiegssteilheit in Flußrichtung gegenüber der Sperrrichtung vermindert. Dies bedeutet, daß der gerade leitend werdende Transistor (z. B. T1) langsamer angesteuert wird als der sperrende Transistor (z. B. T2).

Diese Schaltungsart gewährleistet ein sicheres Schaltverhalten der Transistoren T1, T2, da dabei die Minoritätsträger im Halbleiter-Kristall wirkungsvoll aus der Sperrzone abgesaugt werden. Somit kommt es bei den Schaltübergangszuständen zu keinen gefährlichen Überlappungen der Sperr- und Leitphase in den Transistoren T1, T2.

Die Reihenschaltung der Steuerwicklungen L2, L2' (bei Mehrlampenbetrieb) ist mit ihrem Anfang am Emitterwiderstand R1a des Transistors T1 und mit ihrem Ende am Basis-fernen Anschlußpunkt des jeweiligen Dioden-Kreises 31a angeschlossen (Fig. 3). Bei Einlampenbetrieb ist der Anschluß der Steuerwicklung L2 entsprechend vorgenommen (Fig. 2). Im Gegensatz hierzu ist die Reihenschaltung der Steuerwicklungen L3, L3' (bei Mehrlampenbetrieb) mit ihrem Ende am Emitterwiderstand R1b des Transistors T2 und mit ihrem Anfang am Basisfernen Anschlußpunkt des jeweiligen Dioden-Kreises 31b angeschlossen ; auch hier ist bei Einlampenbetrieb der Anschluß der Steuerwicklung L3 entsprechend vorgenommen.

Wie bereits ausgeführt, sorgen die Emitterwiderstände R1a, R1b insbesondere für eine Symmetrierung der Transistor-Schaltabläufe. Es können ohmsche Widerstände (Festwiderstände) oder PTC-Widerstände verwendet sein. PTC-Widerstände haben den Vorteil, daß sie noch eine gewisse Regelfunktion übernehmen können. Tritt z. B. eine Laständerung ein, hierdurch können höhere oder niedrigere Transistorschaltströme auftreten, wird beim PTC-Widerstand eine effektivere Gegenkopplungswirkung erzeugt, sein Widerstandswert wird entsprechend größer oder kleiner. Im Vergleich zu einem ohmschen Widerstand ist der PTC-Widerstand so gewählt, daß bei Normalbetrieb sein Widerstandswert gleich dem des Festwiderstandes ist. Eine ähnliche Regelfunktion kann auch von einer entsprechend bemessenen Glühlampe übernommen werden.

Im weiteren ist den Kollektor-Emitter-Strecken der Schalttransistoren T1 und T2 und den damit in Reihe liegenden Emitterwiderständen R1a und R1b jeweils eine Gleichrichterdiode 32a bzw. 32b antiparallelgeschaltet. Diese sog. Freilaufdioden verhindern den Inversbetrieb des jeweiligen Transistors T1 bzw. T2. Bei den einzelnen Umschaltvorgängen übernehmen die Dioden 32a, 32b den inversen Stromfluß, der durch Streuinduktivitäten in den Resonanzkreisen 4, 4' entsteht.

Der Anschwingkreis 10 enthält wie bereits ausgeführt insbesondere den Kondensator C4, über den die Basis des Transistors T2 mit einem der beiden Wechselspannungsanschlüsse der Gleichrichtervorrichtung 13 verbunden ist. Des weiteren ist die Kollektor-Basis-Strecke des mit dem positiven Gleichspannungsanschluß verbundenen Schalttransistors T1 von einem Widerstand 33 überbrückt. In dieser Beschaltung kann der Widerstandswert von 33 (im Vergleich zur Schaltungsausführung gemäß dem Hauptpatent, der Anschwing-Hilfswiderstand ist hier der Kollektor-Emitter-Strecke des Transistors T1 parallelgeschaltet) erheblich höher gewählt werden, da sich der Stromverstärkungsfaktor des Transistors auswirkt. Von Vorteil ist, der Widerstand verbraucht weniger Verlustleistung und kann kleiner dimensioniert werden.

**Patentansprüche**

1. Vorschaltanordnung zum Betreiben einer oder mehrerer Niederdruckentladungslampen (3, 3'), die einen selbsterregenden Gegentaktschalter enthält, der zwei mit den Kollektor-Emitter-Strecken in Reihe liegende gleichsinnig gepolte Schalttransistoren (T1, T2) aufweist, die den Gleichspannungsausgang (1, 2) eines mit Wechselspannung versorgten Wandlerteils (5) überbrücken, und bei der jeder Lampenbetriebskreis mit einem eigenen Serienresonanzkreis (4, 4') gekoppelt ist, der aus der jeweiligen Vorschaltinduktivität (L1 bzw. L1') und einem Kondensator (C1 bzw. C1') besteht, wobei eine Anschwing- und Steuerschaltung (10 ; 9a, 9b) für die Schalttransistoren (T1, T2) vorgesehen ist, dadurch gekennzeichnet, daß die Basis des — mit dem negativen Gleichspannungsanschluß (2) verbundenen — Schalttransistors (T2) über einen Kondensator (C4) an einen der beiden Anschlüsse der Wechselspannungsversorgung des Wandlerteils (5) angeschlossen ist und daß jeder der beiden Schalttransistoren (T1, T2) einen Emitterwiderstand (R1a bzw. R1b) aufweist.

2. Vorschaltanordnung nach Anspruch 1, dadurch gekennzeichnet, daß die Emitterwiderstände (R1a, R1b) ohmsche Widerstände sind.

3. Vorschaltanordnung nach Anspruch 2, dadurch gekennzeichnet, daß die Emitterwiderstände (R1a, R1b) PTC-Widerstände sind.

4. Vorschaltanordnung nach Anspruch 3, dadurch gekennzeichnet, daß den Kollektor-Emitter-Strecken der Schalttransistoren (T1, T2) in Reihe mit den jeweiligen Emitterwiderständen (R1a, R1b) jeweils eine Gleichrichterdiode (32a bzw. 32b) antiparallel geschaltet ist.

5. Vorschaltanordnung nach Anspruch 4, dadurch gekennzeichnet, daß die Kollektor-Basis-Strecke des mit dem positiven Gleichspannungsanschluß (1) verbundenen Schalttransistors (T1) von einem Widerstand (33) überbrückt ist.

6. Vorschaltanordnung nach Anspruch 5, dadurch gekennzeichnet, daß den beiden Schalttransistoren (T1, T2) mit den Vorschaltinduktivitäten (L1, L1') gekoppelte Steuerwicklungen (L2, L2' bzw. L3, L3') zugeordnet sind, die jeweils (Gruppe L2 bzw. L3) über zwei antiparallelgeschaltete Dioden (27a, 28a bzw. 27b, 28b) mit der Basis des Transistors (T1 bzw. T2) verbunden sind, wobei im Dioden-Kreis (31a bzw. 31b) die in Flußrichtung zur Basis hin gepolte Diode (27a bzw. 27b) noch mit einer Induktivität (29a bzw. 29b) und einem Strombegrenzungswiderstand (30a bzw. 30b) in Reihe liegt.

7. Vorschaltanordnung nach Anspruch 6, dadurch gekennzeichnet, daß bei Einlampenbetrieb die Steuerwicklung (L2) mit ihrem Anfang am Emitterwiderstand (R1a) des Transistors (T1) und mit ihrem Ende am Basis-fernen Anschlußpunkt des jeweiligen Dioden-Kreises (31a) angeschlossen ist, während die Steuerwicklung (L3) mit ihrem Ende am Emitterwiderstand (R1b) des Transistors (T2) und mit ihrem Anfang am Basis-fernen Anschlußpunkt des jeweiligen Dioden-Kreises (31b) angeschlossen ist.

8. Vorschaltanordnung nach Anspruch 6, dadurch gekennzeichnet, daß die bei Mehrlampenbetrieb auf die einzelnen Lampenbetriebskreise aufgeteilten Steuerwicklungen (L2, L2' bzw. L3, L3') in einer Reihenschaltung angeordnet sind, wobei die Reihenschaltung (L2, L2') mit ihrem Anfang am Emitterwiderstand (R1a) des Transistors (T1) und mit ihrem Ende am Basis-fernen Anschlußpunkt des jeweiligen Dioden-Kreises (31a) angeschlossen ist, während die Reihenschaltung (L3, L3') mit ihrem Ende am Emitterwiderstand (R1b) des Transistors (T2) und mit ihrem Anfang am Basis-fernen Anschlußpunkt des jeweiligen Dioden-Kreises (31b) angeschlossen ist.

9. Vorschaltanordnung nach Anspruch 7 und 8, dadurch gekennzeichnet, daß das die Gleichspannungsversorgung für den Gegentaktschalter liefernde Wandlerteil (5) im wesentlichen aus einem Brückengleichrichter (13) besteht, dem ein Siebkondensator (14) nachgeschaltet ist.

10. Vorschaltanordnung nach Anspruch 7 und 8, dadurch gekennzeichnet, daß das die Gleichspannungsversorgung für den Gegentaktschalter liefernde Wandlerteil (5) im wesentlichen aus einer symmetrischen Verdopplerschaltung besteht.

11. Vorschaltanordnung nach Anspruch 9 und 10, dadurch gekennzeichnet, daß bei Mehrlampenbetrieb die einzelnen Lampenbetriebskreise mit den entsprechenden Serienresonanzkreisen (4, 4') in Parallelschaltung angeordnet sind.

## Claims

1. A lamp operating circuit for operating one or more low-pressure discharge lamps (3, 3') comprising a self-exciting push-pull switch composed of two switching transistors (T1, T2) that are polarized in the same direction, are serially connected with the collector-emitter paths, and bridge the d-c terminals (1, 2) of an a-c supplied converter (5), with each lamp operating circuit being coupled to its own series resonant circuit (4, 4') that is composed of the respective ballast inductance (L1, L1') and a capacitor (C1, C1'), with an oscillation trigger and control circuit (10 ; 9a, 9b) being provided for the switching transistors (T1, T2), wherein the base of the switching transistor (T2) connected to the negative d-c terminal (2) is connected via a capacitor (C4) to one of the two terminals of the a-c supply for the converter (5) and each of the two switching transistors (T1, T2) comprises an emitter-resistor (R1a, R1b).

2. A lamp operating circuit according to claim 1, wherein the emitter-resistors (R1a, R1b) are ohmic resistors.

3. A lamp operating circuit according to claim 2, wherein the emitter-resistors (R1a, R1b) are PTC-resistors.

4. A lamp operating circuit according to claim 3, wherein the collector-emitter paths of the switching transistors (T1, T2) in series with the respective emitter-resistors (R1a, R1b) have in each case a rectifier diode (32a, 32b) connected therewith in antiparallel manner.

5. A lamp operating circuit according to claim 3, wherein the collector-base path of the switching transistor (T1) connected to the positive d-c terminal (1) is bridged by a resistor (33).

6. A lamp operating circuit according to claim 5, wherein control windings (L2, L2' ; L3, L3') coupled to the ballast inductances (L1, L1') are associated with the two switching transistors (T1, T2), the control windings (group L2 or L3) being connected in each case via two antiparallel connected diodes (27a, 28a ; 27b, 28b) to the base of the transistor (T1, T2) whereby in the diode circuit (31a ; 31b) the diode (27a ; 27b) polarized for conduction to the base is serially connected with an inductance (29a ; 29b) and a current limiting resistor (30a ; 30b).

7. A lamp operating circuit according to claim 6, wherein in single-lamp operation the control winding (L2) is connected with its beginning to the emitter-resistor (R1a) of the transistor (T1) and with its end to the terminal of the respective diode circuit (31a) remote from the base, whereas the control winding (L3) is connected with its end to the emitter-resistor (R1b) of the transistor (T2) and with its beginning to the terminal of the respective diode circuit (31b) remote from the base.

8. A lamp operating circuit according to claim 6, wherein in multiple-lamp operation the control windings (L2, L2' ; L3, L3') associated with the individual lamp operating circuits are disposed in a series arrangement whereby the series arrangement (L2, L2') is connected with its beginning to the emitter-resistor (R1a) of the transistor (T1) and with its end to the terminal of the respective diode circuit (31a) remote from the base, whereas the series arrangement (L3, L3') is connected with its end to the emitter-resistor (R1b) of the transistor (T2) and with its beginning to the terminal of the respective diode circuit (31b) remote from the base.

9. A lamp operating circuit according to claims 7 and 8, wherein the converter (5) providing the d-c supply for the push-pull switch is substantially a bridge rectifier (13) with a serially connected filter capacitor (14).

10. A lamp operating circuit according to claims 7 and 8, wherein the converter (5) providing the d-c supply for the push-pull switch is substantially a symmetrical doubler circuit.

11. A lamp operating circuit according to claims 9 and 10, wherein in multiple-lamp operation the individual lamp operating circuits are connected across the respective series resonant circuits (4, 4').

## Revendications

1. Circuit ballast pour faire fonctionner une ou plusieurs lampes de décharge à basse pression (3, 3') et qui comprend un commutateur push-pull à auto-excitation qui présente deux transistors de commutation (T1, T2) polarisés dans le même sens, se trouvant en série avec les trajets collecteur-émetteur et qui shuntent la sortie de tension continue (1, 2) d'une section de transformateur (5) alimentée en tension alternative, et lorsque le fonctionnement est à plusieurs lampes, chacun des circuits de fonctionnement de lampe est couplé à un circuit propre (4, 4') de résonance série qui est constitué par l'inductivité ballast correspondante (L1 ou L1') et par un condensateur (C1 ou C1'), un circuit d'oscillation et de commande (10 ; 9a, 9b) étant prévu pour les transistors de commutation (T1, T2), caractérisé en ce que la base du transistor de commutation (T2) relié à la borne négative (2) de tension continue est raccordée par un condensateur (C4) sur une des deux connexions de l'alimentation en tension alternative de la section de transformateur (5) et en ce que chacun des deux transistors de commutation (T1, T2) présente une résistance d'émetteur (R1a ou R1b).

2. Circuit ballast selon la revendication 1, caractérisé en ce que les résistances d'émetteur (R1a, R1b) sont des résistances ohmiques.

3. Circuit ballast selon la revendication 2, caractérisé en ce que les résistances d'émetteur (R1a, R1b) sont des résistances CTP.

4. Circuit ballast selon la revendication 3, caractérisé en ce qu'une diode redresseuse respective (32a ou 32b) est couplée en montage antiparallèle sur les trajets collecteur-émetteur des transistors de commutation (T1, T2), en série avec les résistances d'émetteur respectives (R1a, R1b).

5. Circuit ballast selon la revendication 4, caractérisé en ce que le trajet collecteur-base du transistor de commutation (T1) relié à la borne positive de tension continue (1) est shunté par une résistance (33).

6. Circuit ballast selon la revendication 5, caractérisé en ce qu'aux deux transistors de commutation (T1, T2) sont associés des enroulements de commande (L2, L2' ou L3, L3') couplés aux inductivités ballast (L1, L1') et qui sont reliés respectivement (groupe L2 ou L3) par deux diodes (27a, 28a ou 27b, 28b) montées anti-parallèlement à la base du transistor (T1 ou T2), la diode (27a ou 27b) polarisée dans le sens du courant en direction de la base, dans le circuit de diode (31a ou 31b) se trouvant alors encore en série avec une inductivité (29a ou 29b) et une résistance de limitation de courant (30a ou 30b).

7. Circuit ballast selon la revendication 6, caractérisé en ce que, lors d'un fonctionnement à une lampe, l'enroulement de commande (L2) est raccordé à son début sur la résistance d'émetteur (R1a) du transistor (T1) et à sa terminaison sur le point de raccordement éloigné de la base du circuit correspondant de diode (31a), tandis que l'enroulement de commande (L3) est raccordé à sa terminaison sur la résistance d'émetteur (R1b) du transistor (T2) et, à son début, sur le point de raccordement éloigné de la base du circuit correspondant de diode (31b).

8. Circuit ballast selon la revendication 6, caractérisé en ce que, lors d'un fonctionnement avec plusieurs lampes, les enroulements de commande (L2, L2' ou L3, L3') répartis sur les circuits individuels de fonctionnement de lampe sont disposés en un circuit série, ce circuit série (L2, L2') étant raccordé à son début sur la résistance d'émetteur (R1a) du transistor (T1) et, à sa terminaison, sur le point de raccordement éloigné de la base du circuit correspondant de diode (31a), tandis que le circuit série (L3, L3') est raccordé à sa terminaison sur la résistance d'émetteur (R1b) du transistor (T2) et, à son début, sur le point de raccordement éloigné de la base du circuit correspondant de diode (31b).

9. Circuit ballast selon la revendication 7 et la revendication 8, caractérisé en ce que la section de transformateur (5) délivrant l'alimentation de tension continue pour le commutateur push-pull est constituée essentiellement d'un redresseur en pont (13) sur lequel est monté en aval un condensateur de filtrage (14).

10. Circuit ballast selon la revendication 7 et la revendication 8, caractérisé en ce que la section de transformateur (5) délivrant l'alimentation en tension continue pour le commutateur push-pull est constituée essentiellement d'un circuit doubleur symétrique.

11. Circuit ballast selon la revendication 9 et la revendication 10, caractérisé en ce que dans le cas d'un fonctionnement de plusieurs lampes, les circuits individuels de fonctionnement de lampe sont disposés en un montage parallèle sur les circuits (4, 4') correspondants de résonance série.

FIG.1

220V~/50 Hz (110V~/60 Hz)

0 062 276

FIG. 2

**0 062 276**

FIG. 3